# EUROPÄISCHE PATENTSCHRIFT

(11) **EP 1 894 790 B1**
(45) Veröffentlichungstag und Bekanntmachung des Hinweises auf die Patenterteilung: **11.01.2012**
(21) Anmeldenummer: 07113584.2
(22) Anmeldetag: 01.08.2007
(51) Int. Cl.: H04L 12/403

(54) **Verfahren zum Synchronisieren von vernetzten Steuereinrichtungen**
Method for synchronising networked control devices
Procédé destiné à la synchronisation de dispositifs de commande en réseau

(30) Priorität: 04.09.2006 DE 102006041394
(43) Veröffentlichungstag der Anmeldung: 05.03.2008
(73) Patentinhaber: ROBERT BOSCH GMBH, 70442 Stuttgart (DE)
(72) Erfinder: Ferch, Markus, 71723 Grossbottwar (DE)

(56) Entgegenhaltungen:
- US-A- 5 787 301
- US-A1- 2004 143 656

## Beschreibung

Die vorliegende Erfindung betrifft ein Verfahren zum Synchronisieren von vernetzten Steuereinrichtungen sowie eine zur Durchführung des Verfahrens geeignete Kommunikationsnetzwerkvorrichtung.

### Stand der Technik

Bei einer Vielzahl von miteinander vernetzten Steuergeräten, die in ihrer Kombination komplexe Aufgaben bewältigen, ist es häufig notwendig, dass bestimmte Funktionen zeitlich miteinander synchron ablaufen. Im Kraftfahrzeugbereich beispielsweise sind eine Vielzahl von Steuergeräten, wie beispielsweise Steuereinrichtungen für ein elektronisches Stabilisierungsprogramm, die Getriebesteuerung oder die Motorsteuerung, häufig über einen CAN-(Controller Area Network) Bus miteinander vernetzt. Ebenso können Türsteuergeräte, Steuergeräte für die Zentralverriegelung und Steuergeräte für die Fensterheber miteinander vernetzt werden. Es ist dabei oft notwendig, dass die in den jeweiligen Steuergeräten programmierten Funktionen in einer vorgegebenen zeitlichen Abfolge oder auch gleichzeitig synchron ablaufen müssen.

Eine Möglichkeit der zeitlichen Synchronisation besteht darin, eine globale Zeit für die an das jeweilige Bussystem angekoppelten Steuergeräte zu definieren und über den jeweiligen Bus an die Geräte zu verteilen. Falls nun eine Auswahl von Steuergeräten gleichzeitig Funktionen oder Aktionen durchführen sollen, kann so eine globale Ausführungszeit definiert werden. Nachteilig dabei ist, dass das eingesetzte Bussystem und alle Steuergeräte mit zusätzlicher Hardware ausgestattet werden müssen, wie beispielsweise Zähler zum Zählen der globalen Zeit anhand eines Bustaktes. Auch bei der Definition einer derartigen globalen Zeitsynchronisation können sich beispielsweise in der Hochfahrphase Zeitversätze gegenüber der nominalen Zeit ergeben, die oft nicht tolerierbar sind.

Aus der US 5,787,301 ist ein Computersystem bekannt, welches mehrere Prozessoreinheiten, ein Datenübertragungsnetzwerk zur Verbindung der Prozessoreinheiten, ein Synchronisationsnetzwerk, welches eine synchrone Programmausführung durch die Prozessoreinheiten ermöglicht, eine Verbindungseinheit zur Verbindung der Prozessoreinheiten und dem Synchronisationsnetzwerk, sowie eine Eingabeeinheit, welche mit dem Synchronisationsnetzwerk verbunden ist, aufweist.

Die US 2004/0143656 A1 beschreibt eine Steuersoftware-Architektur zur Realisierung einer dezentralen, kooperativen Steuerung einer Mehrzahl von über ein Netzwerk verbundenen elektronischen Steuereinheiten.

Die der vorliegenden Erfindung zugrunde liegende Problematik besteht darin, bei einer Vielzahl von vernetzten Steuereinrichtungen einen zeitlich synchronen Ablauf von Funktionen zu gewährleisten.

### Offenbarung der Erfindung

Diese Aufgabe wird durch die Erfindung gemäß den unabhängigen Ansprüchen gelöst. Erfindungsgemäß sind Stellen im jeweiligen Ablaufplan oder Programmcode einer programmgesteuerten Steuereinrichtung vorgesehen, die bei der Abarbeitung durch die Slave-Steuereinrichtung das Versenden einer Erledigt-Nachricht an eine Master-Steuereinrichtung und das gleichzeitige Abstoppen der weiteren Bearbeitung hervorruft. Werden mehrere vernetzte Steuereinrichtungen nach diesem Verfahren betrieben, kann die Master-Steuereinrichtung überprüfen, wie viele oder ob alle notwendigen Slave-Steuereinrichtungen die vorgegebenen Ablaufpunkte in ihrem Programmcode erreicht haben. Die Slave-Steuereinrichtungen werden dann zu einem vorgegebenen Zeitpunkt gleichzeitig durch Versenden bzw. Empfangen der Freigabe-Nachricht wieder in Gang setzen. Damit ist einerseits gewährleistet, dass die Funktion bestimmter Steuereinrichtungen, beispielsweise im Kraftfahrzeug eine Steuereinrichtung zur Aktivierung einer Wegfahrsperre oder Alarmanlage, nicht in Gang gesetzt wird, ehe die Funktion anderer im Zusammenhang stehender Steuereinrichtungen, wie eine Steuerung für einen Fensterschließmechanismus oder die Zentralverriegelung, ihre Funktionen oder Aufgaben erfüllt hat und bei den jeweiligen Ablaufplänen oder Programmcodes an ihre vorgegebenen Ablaufpunkte gelangt ist.

Andererseits ermöglicht das erfindungsgemäße Verfahren durch Versenden der Freigabe-Nachricht an alle an das Kommunikationsnetz gekoppelten Slave-Steuereinrichtungen, dass diese Slave- Steuereinrichtungen synchron ihre Funktion gemäß dem jeweiligen Ablaufplan oder Programm aufnehmen. Die Erfindung hat insbesondere den Vorteil, dass kein zusätzlicher Hardware-Aufwand wie bei der Verwendung einer globalen Zeitbasis notwendig ist.

Vorzugsweise werden die folgenden Verfahrensschritte ausgeführt:
- Abarbeiten von zugeordneten Ablaufplänen in mehreren Slave-Steuereinrichtungen, wobei ein jeweiliger Ablaufplan nacheinander zu bearbeitende Befehle umfasst;
- Senden einer Erledigt-Nachricht von einer Slave-Steuereinrichtung an die Master-Steuereinrichtung, falls ein durch einen Barrier-Befehl gekennzeichneter Ablaufpunkt des zugeordneten Ablaufplanes erreicht wird, und gleichzeitiges Anhalten des Abarbeitens des zugeordneten Ablaufplanes in der Slave-Steuereinrichtung;
- Empfangen von Erledigt-Nachrichten in der Master-Steuereinrichtung und Zählen der empfangenen Erledigt-Nachrichten; und
- Senden einer Freigabe-Nachricht von der Master-Steuereinrichtung an die Slave-Steuereinrichtungen, falls eine vorgegebene Anzahl von Erledigt-Nachrichten empfangen wurde.

In einer Weiterbildung des erfindungsgemäßen Verfahrens werden die Ablaufpunkte in Ablaufklassen zugeordnet, und es wird nur dann von der Master-Steuereinrichtung eine Freigabe-Nachricht an die Slave-Steuereinrichtungen gesendet, wenn für alle Ablaufpunkte einer Ablaufklasse eine jeweilige Erledigt-Nachricht empfangen wurde. Das heißt, dass wenn den Ablaufpunkten einer Ablaufklasse vorzugsweise jeweils eine einheitliche Identifikationsnummer zugeordnet wird, die Master-Steuereinrichtung überprüfen kann, welche Slave-Steuereinrichtungen bereits einen Ablaufpunkt oder Haltepunkt in ihrem Ablaufplan erreicht haben. Es ist dann auch von Vorteil, dass eine jeweilige Erledigt-Nachricht die Identifikationsnummer des jeweiligen Ablaufpunktes aufweist. Es ist dabei auch möglich, dass in einem Ablaufplan für eine einzige Slave-Steuereinrichtung mehrere Ablaufpunkte unterschiedlicher Ablaufklassen vorliegen.

In einer Variante des erfindungsgemäßen Verfahrens wird zum Beispiel in der Master-Steuereinrichtung die Anzahl der empfangenen Erledigt-Nachrichten einer Ablaufklasse gezählt. Dann wird bei Vorliegen einer vorgegebenen Anzahl von Erledigt-Nachrichten einer Ablaufklasse für die Ablaufklasse eine Freigabe-Nachricht gesendet. Es ist beispielsweise möglich, dass das bei fünf vorliegenden vernetzten Slave-Steuereinrichtungen in jedem Ablaufplan ein Ablaufpunkt vorgesehen ist, der durch einen Barrier-Befehl mit einer Identifikationsnummer für den Ablaufpunkt vorgesehen ist. Werden von der Master-Steuereinrichtung nun fünf entsprechende Erledigt-Nachrichten mit dieser Identifikationsnummer empfangen, ist sichergestellt, dass alle Slave-Steuereinrichtungen bis zu dem jeweiligen Ablaufpunkt ihre Funktion ausgeführt haben. Nun kann die weitere Bearbeitung der Ablaufpläne gleichzeitig gestartet werden, indem die Master-Steuereinrichtung die Freigabe-Nachricht absendet.

Die Erfindung betrifft ferner ein Computerprogrammprodukt, welches die Durchführung eines erfindungsgemäßen Verfahrens auf einer oder mehreren programmgesteuerten Recheneinrichtungen veranlasst. Denkbar ist dabei die Implementierung auf einem Datenträger, welcher eine programmgesteuerte Recheneinrichtung veranlasst, die erfindungsgemäßen Verfahrens auszuführen. Dann ist das Verfahren zum Synchronisieren vernetzter Steuereinrichtungen in maschinenlesbarer Form auf einem Speichermedium codiert.

Die Erfindung schafft ferner eine Kommunikationsnetzwerkvorrichtung mit mindestens einer Master-Steuereinrichtung und mehreren Slave-Steuereinrichtungen, welche über einen Datenbus miteinander vernetzt sind. Dabei sind die Master- und Slave-Steuereinrichtungen derart ausgestaltet, dass ein erfindungsgemäßes Verfahren zum Synchronisieren der vernetzten Steuereinrichtungen durchgeführt wird.

Vorzugsweise sind dabei die Steuereinrichtungen als programmgesteuerte Mikrocontroller ausgeführt, und ein jeweiliger Ablaufplan ist als Programmcode mit Barrier-Befehlen implementiert, welche den Aufruf einer Barrier-Routine zum Senden von Erledigt-Nachrichten veranlassen.

Der Datenbus kann beispielsweise als CAN-, LIN-, oder MOST-Bus, insbesondere in einem Kraftfahrzeug ausgeführt werden.

Weitere vorteilhafte Ausgestaltungen der Erfindung sind Gegenstand der Unteransprüche sowie der im Folgenden beschriebenen Ausführungsbeispiele der Erfindung.

### Kurze Beschreibung der Zeichnungen

Im Folgenden wird die Erfindung anhand bevorzugter Ausführungsbeispiele unter Bezugnahme auf die beigelegten Figuren näher erläutert. Es zeigt dabei:
- Fig. 1:: Ein Blockschaltbild einer Ausführungsform der erfindungsgemäßen Kommunikationsnetzwerkvorrichtung;
- Fig. 2:: Ein Zeit- und Nachrichtenaustauschdiagramm für eine Variante des erfindungsgemäßen Verfahrens zum Synchronisieren von vernetzten Steuereinrichtungen; und
- Fig. 3:: Ein Ablaufdiagramm der Variante des erfindungsgemäßen Verfahrens.

In den Figuren sind, sofern nichts anderes angegeben ist, gleiche beziehungsweise funktionsgleiche Elemente mit denselben Bezugszeichen versehen worden.

### Ausführungsformen der Erfindung

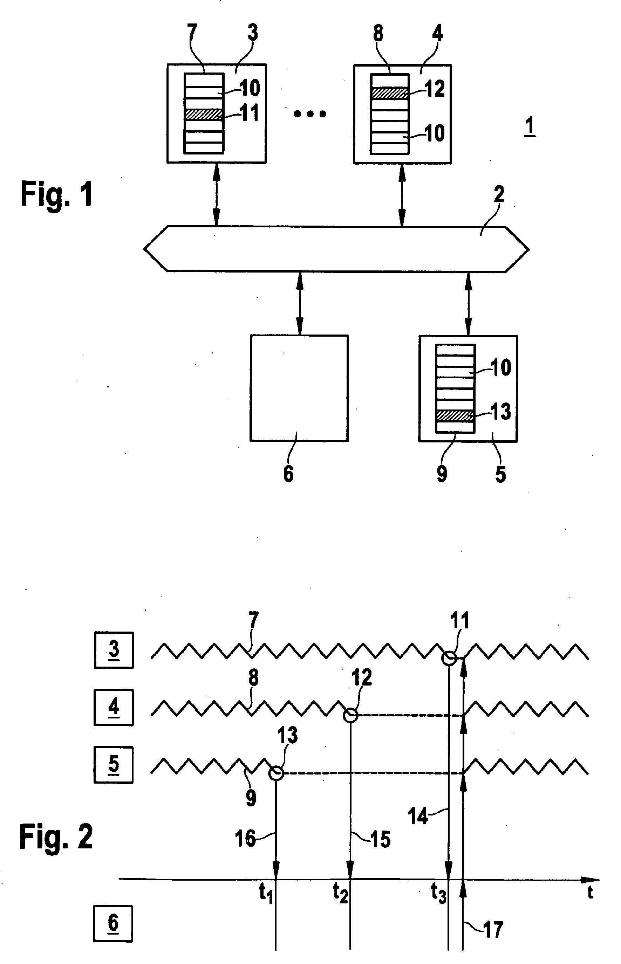

In der Figur 1 ist eine Kommunikationsnetzwerkvorrichtung 1 schematisch dargestellt. Dabei ist als Kommunikationsnetzwerk ein Datenbus, beispielsweise ein CAN-Bus zum Einsatz in einem Kraftfahrzeug, verwendet. Über den Datenbus 2 sind an den Datenbus gekoppelte Slave-Steuereinrichtungen 3, 4, 5 miteinander vernetzt. Ferner ist eine Master-Steuereinrichtung 6 an den Datenbus 2 gekoppelt. Es ist beispielsweise denkbar, dass die Slave-Steuereinrichtungen 4, 5 als programmgesteuerte Mikrocontroller zur Steuerung der Zentralverriegelung eines Kraftfahrzeugs und der Fensterheber des Kraftfahrzeugs ausgeführt sind. Die erste Slave-Steuereinrichtung 3 ist dann zum Beispiel als Controller für die im Fahrzeug vorgesehene Alarmanlage ausgestaltet.

Die Steuereinrichtungen 3, 4, 5 sind jeweils über einen Ablaufplan oder Programmcode 7, 8, 9, der jeweils eine Reihenfolge von Befehlen 10 aufweist, in ihrer Funktion definiert. In den Ablaufplänen 7, 8, 9, beziehungsweise den Programmcodes, der Steuereinrichtungen 3, 4, 5 sind ferner sogenannte Barrier-Befehle 11, 12, 13 vorgesehen, die an vorgegebenen Ablaufpunkten in dem Ablaufplan, beziehungsweise Programmcode, vorgesehen sind. In der zuvor angenommene Situation, in der die Slave-Steuereinrichtung 4 eine Zentralverriegelung aktiviert und die Slave-Steuereinrichtung 5 das automatische Hochfahren der Fenster beispielsweise beim Abschließen des Fahrzeugs steuert, ist es notwendig, dass die beiden Funktionen, Verschließen des Fahrzeugs durch die Zentralverriegelung und Schließen der Fenster, erfolgen, bevor eine Steuereinrichtung 3 für den Autoalarm ihre Funktionen startet. Dies wird durch das erfindungsgemäße Verfahren zum Synchronisieren der Funktionen dieser vernetzten Steuereinrichtungen 3, 4, 5, gewährleistet.

In der Figur 2 ist zur näheren Erläuterung eines möglichen Verfahrensablaufs ein entsprechender Zeitablauf dargestellt. Die oberhalb der Zeitachse t dargestellten Zickzacklinien stellen die zeitliche Abarbeitung der Ablaufpläne 7, 8, 9 oder Programmcodes in den Slave-Steuereinrichtung 3, 4, 5 dar. Die untere horizontale Zickzacklinie stellt zum Beispiel die Bearbeitung des Ablaufplanes 9 der Fensterheber-Steuereinrichtung 5 dar. Gemäß der Programmierung beziehungsweise des Ablaufplanes 9 wird nun die Steuereinrichtung 5 die Motoren für die Fensterheber derart steuern, dass die Fenster geschlossen werden. Zum Zeitpunkt t₁ ist daher in dem entsprechenden Ablaufprogramm 9 für die Fensterhebersteuereinrichtung 5 ein Barrier-Befehl oder Ablaufpunkt 13 vorgesehen. Wird in dem Programmablauf dieser Barrier-Befehl 13 erreicht, sendet die Slave-Steuereinrichtung 5 über den Datenbus 2 eine Erledigt-Nachricht 16 an die ebenfalls an den Datenbus 2 gekoppelte Master-Steuereinrichtung 6. Dies ist in der Figur 2 durch die nach unten weisenden Pfeile angedeutet. Ab dem Zeitpunkt t₁ stoppt die Fensterheber-Steuereinrichtung 5 die weitere Bearbeitung ihres Programmcodes 9. Dies ist durch die horizontale gestrichelte Linie angedeutet.

Während die Fensterheber-Steuereinrichtung ihr Funktion durch Bearbeiten des ihr zugeordneten Ablaufplanes erfüllt, arbeitet die Slave-Steuereinrichtung 4, welche die Zentralverriegelung des Fahrzeugs steuert, ebenfalls ihren Ablaufplan 8 solange ab, bis ein entsprechender Barrier-Befehl 12 erreicht wird. Ist dies zum Zeitpunkt t₂ erfolgt, versetzt sich die Zentralverriegelungs-Steuereinrichtung 4 in einen Wartemodus, stoppt also zunächst jegliche weitere Bearbeitung des Programmcodes 8. Die für die Alarmanlage zuständige Steuereinrichtung 3 arbeitet ebenfalls bis zum Auftreten eines vorgegebenen Ablaufpunktes 11 oder eines Barrier-Befehls in ihrem Programmcode 7 ihre zugewiesenen Aufgaben. Zum Zeitpunkt t₃ sendet die Slave-Steuereinrichtung 3 die Erledigt-Nachricht 14 an die Master-Steuereinrichtung 6.

Die Master-Steuereinrichtung 6 zählt zum Beispiel die ihr zugegangenen Erledigt-Nachrichten 14, 15, 16 und stellt fest, dass alle notwendigen Steuereinrichtungen, in dem hier beschriebenen Fall die drei Slave-Steuereinrichtungen für die Fensterheber 5 die Zentralverriegelung 4 und die Alarmanlage 3 die vorgegebenen Barrier oder Ablaufpunkte 13, 12, 11 erreicht haben.

Muss der weitere Ablauf von diesen drei Steuereinrichtungen 3, 4, 5 zeitsynchron koordiniert werden, sendet die Master-Steuereinrichtung 6 bei Vorliegen von drei Erledigt-Nachrichten 14, 15, 16 (die in dem hier beispielhaft betrachteten Fall derselben Klasse angehören) sofort eine Freigabe-Nachricht 17 an die drei Slave-Steuereinrichtung 3, 4, 5. Daraufhin setzen diese ihre zugeordneten Ablaufpläne beziehungsweise Programmcodes zeitgleich fort. Beispielsweise kann in dem hier vorliegenden Szenario für das Einschalten einer Wegfahrsperre in den nach den Ablaufpunkten 11, 12, 13 liegenden Programmteilen oder Ablaufplänen der Slave-Steuereinrichtungen 3, 4, 5 Aufgaben legen, wie Aktivieren einer Wegfahrsperre durch die Alarmanlage und Trennen der Stromversorgung für die Fensterheber und Türschließmechanismen.

Aufgrund der erfindungsgemäßen Verbindung von Barrier-Befehlen 11, 12, 13 und der Verwaltung der empfangenen Erledigt-Nachrichten 14, 15 16 durch die Master-Steuereinrichtung 6, welche diese zählt, ist ausgeschossen, dass durch eine fehlerhafte oder nicht vorliegende Synchronisation beispielsweise das einschalten der entsprechenden A-larmsirene durch die Steuereinrichtung 3 aktiviert wird, was in den nach dem Barrier-Befehl vorgesehenen Befehlen des Programmcodes im Ablaufplan vorgesehen sein kann, während noch die Fensterheber von der Steuereinrichtung 5 gesteuert arbeiten. Die erfindungsgemäße Synchronisation der Steuergeräte oder Steuereinrichtungen ist insbesondere dann notwendig, wenn in einer Hochfahrphase oder Shutdownphase der miteinander vernetzten Steuergeräte deren jeweils zugeordnete Funktionen miteinander Wechselwirken können.

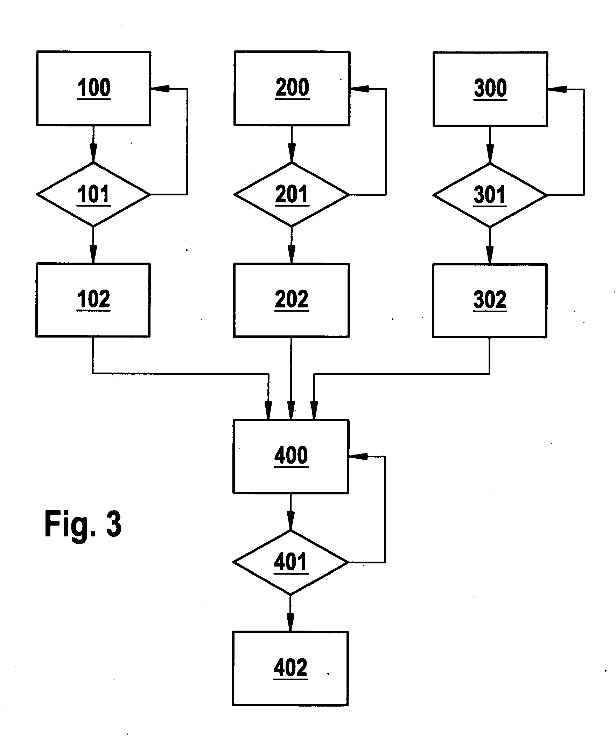

In der Figur 3 ist ein Ablaufdiagramm des erfindungsgemäßen Verfahrens welches durch die jeweils programmgesteuerten Steuereinrichtungen 3, 4, 5, 6 durchgeführt wird, schematisch dargestellt. In ersten Verfahrenschritten 100, 200, 300 werden die jeweiligen Programme oder Ablaufpläne 7, 8, 9 der Slave-Steuereinrichtungen 3, 4, 5 durchgeführt. Dabei ist jeweils für jede Slave-Steuereinrichtung 3, 4, 5 ein Vergleichsschritt 101, 201, 301 vorgesehen, in dem überprüft wird, ob ein vorgegebener Ablaufpunkt 11, 12, 13 oder Barrier-Befehl aufgerufen wurde. Ist dies nicht der Fall, erfolgt eine Weiterbearbeitung des jeweiligen Ablaufplanes 7, 8, 9 gemäß der Schritte 100, 200, 300.

Falls jedoch ein Ablaufpunkt 11, 12, 13 erreicht wurde, werden im jeweiligen Schritt 102, 202, 302 Erledigt-Nachrichten 14, 15, 16, beispielsweise mit einer jeweiligen Identifikationsnummer für den vorliegenden Barrier-Befehl oder Ablaufpunkt 11, 12, 13 an die Master-Steuereinrichtung 6 versendet. Die Master-Steuereinrichtung zählt die eingegangenen Erledigt-Nachrichten 14, 15, 16 im Schritt 400, wo beispielsweise die Anzahl für jede gleiche Barrier-Identifikationsnummer festgestellt wird.

Im Schritt 401 wird verglichen, ob die hochgezählte Anzahl von empfangenen Erledigt-Nachrichten 14, 15, 16 einem Schwellwert entspricht, der beispielsweise der Anzahl der miteinander zu synchronisierenden Slave-Steuereinrichtungen 3, 4, 5 entspricht. Ist dies nicht der Fall, werden die eingegangen Erledigt-Nachrichten 14, 15, 16 weiterhin gemäß ihrer möglicherweise vorliegenden Klassen und Identifikationsnummern gezählt.

Stellt die Master-Steuereinrichtung 6 fest, dass eine vorgegebene Anzahl von Erledigt-Nachrichten 14, 15, 16 eingegangen sind, das heißt, alle zu überwachenden Slave-Steuereinrichtungen 3, 4, 5 haben einen Barrier-Befehl 11, 12, 13 erreicht und warten, sendet die Master-Steuereinrichtung 6 im Schritt 402 eine Freigabe-Nachricht 17 an alle Slave-Steuereinrichtungen 3, 4, 5 gemäß der Barrier-Identifikationsnummer. Daraufhin werden wiederum die Schritte 100, 200, 300 durchgeführt, bis ein weiterer Barrier-Befehl 11, 12, 13 bei der Abarbeitung der Ablaufpläne vorliegt.

Obwohl die vorliegende Erfindung anhand bevorzugter Ausführungsformen näher erläutert wurde, ist sie nicht darauf beschränkt, sondern vielfältig modifizierbar. Insbesondere können die genannten Steuergeräte weitere Funktionen wie eine Motorsteuerung, Einspritzsteuerung oder Getriebesteuerung ausführen. Denkbar ist ferner die Verwendung einer entsprechenden Slave-Steuereinrichtung für die Anzeige von Komfort- oder Diagnosefunktionen im Kraftfahrzeug. Ferner sind weitere Bus-Typen als Kommunikationsnetz denkbar, wie beispielsweise Flex-Ray, MOST-, Ethernet- WLAN, Bluetooth oder LIN.

## Patentansprüche

1. Verfahren zum Synchronisieren von vernetzten Steuereinrichtungen (3, 4, 5, 6), wobei eine jeweilige Steuereinrichtung (3, 4, 5, 6) eine Funktion zur Steuerung eines Kraftfahrzeugs gemäß einem der Steuereinrichtung (3, 4, 5, 6) zugeordneten Ablaufplan (7, 8, 9) bereitstellt und zwischen den Steuereinrichtungen (3, 4, 5, 6) über ein Kommunikationsnetz (2) Nachrichten austauschbar sind, **dadurch gekennzeichnet, dass** von mindestens einer Slave-Steuereinrichtung (3, 4, 5) zu einem vorgegebenen Ablaufpunkt (11, 12, 13) in dem der Slave-Steuereinrichtung (3, 4, 5) zugeordneten Ablaufplan (7, 8, 9) eine Erledigt-Nachricht (14, 15, 16) an eine Master-Steuereinrichtung (6) gesendet wird und eine weitere Bearbeitung des zugeordneten Ablaufplanes (7, 8, 9) gestoppt wird, bis die Slave-Steuereinrichtung (3, 4, 5) von der Master-Steuereinrichtung (6) eine Freigabe-Nachricht (17) empfängt.

2. Verfahren nach Anspruch 1,
wobei die folgenden Verfahrensschritte ausgeführt werden:
- Abarbeiten (100,200, 300) von zugeordneten Ablaufplänen (7, 8, 9) in mehreren Slave-Steuereinrichtungen (3, 4, 5), wobei ein jeweiliger Ablaufplan (7, 8, 9) nacheinander zu bearbeitende Befehle (10) umfasst;
- Senden (102, 202, 302) einer Erledigt-Nachricht (14, 15, 16) von einer Slave-Steuereinrichtung (3, 4, 5) an die Master-Steuereinrichtung (6) falls ein durch einen Barrier-Befehl **gekennzeichnet**er Ablaufpunkt (11, 12, 13) des zugeordneten Ablaufplanes (7, 8, 9) erreicht wird, und gleichzeitiges Anhalten des Abarbeitens des zugeordneten Ablaufplanes (7, 8, 9) in der Slave-Steuereinrichtung (3, 4, 5);
- Empfangen (400) von Erledigt-Nachrichten (14, 15, 16) in der Master-Steuereinrichtung (6) und Zählen (401) der empfangenen Erledigt-Nachrichten (14, 15, 16); und
- Senden (402) einer Freigabe-Nachricht (17) von der Master-Steuereinrichtung (6) an die Slave-Steuereinrichtungen (3, 4, 5), falls eine vorgegebene Anzahl von Erledigt-Nachrichten (140, 15, 16) empfangen wurde.

3. Verfahren nach Anspruch 1 oder 2,
wobei eine jeweilige Slave-Steuereinrichtung (3, 4, 5) den zugeordneten Ablaufplan (7, 8, 9) weiter abarbeitet sobald von der Slave-Steuereinrichtung (3, 4, 5) eine Freigabe-Nachricht (17) empfangen wurde.

4. Verfahren nach mindestens einem der Ansprüche 1 - 3,
wobei die Ablaufpunkte (11, 12, 13) in Ablaufklassen zugeordnet werden, und von der Master-Steuereinrichtung (6) nur dann eine Freigabe-Nachricht (17) an die Slave-Steuereinrichtungen (3, 4, 5) gesendet werden, wenn für alle Ablaufpunkte (11, 12, 13) einer Ablaufklasse eine jeweilige Erledigt-Nachricht (14, 15, 16) empfangen wurde.

5. Verfahren nach Anspruch 4,
wobei den Ablaufpunkten (11, 12,13) einer Ablaufklasse eine einheitliche Identifikationsnummer zugeordnet wird und eine jeweilige Erledigt-Nachricht (17) die Identifikationsnummer des Ablaufpunktes (11, 12, 13) aufweist.

6. Verfahren nach Anspruch 4 oder 5,
wobei in mindestens einem Ablaufplan (7, 8, 9) mehrere Ablaufpunkte vorgesehen sind, die einer oder mehreren Ablaufklassen zugeordnet sind.

7. Verfahren nach mindestens einem der Ansprüche 4 - 6,
wobei die Anzahl der empfangenen Erledigt-Nachrichten (14, 15, 16) einer Ablaufklasse gezählt wird, und bei einer vorgegeben Anzahl von empfangenen Erledigt-Nachrichten (14, 15, 16) einer Ablaufklasse eine Freigabe-Nachricht (17) für die Ablaufklasse gesendet wird.

8. Computerprogrammprodukt, welches die Durchführung aller Schritte eines Verfahrens nach einem der Ansprüche 1 - 7 auf einer oder mehreren programmgesteuerten Recheneinrichtungen veranlasst.

9. Kommunikationsnetzwerkvorrichtung (1) mit mindestens einer Master-Steuereinrichtung (6) und mehreren Slave-Steuereinrichtungen (3, 4, 5), welche über einen Datenbus (2) miteinander vernetzt sind, wobei die Master- und Slave-Steuereinrichtungen (3, 4, 5, 6) jeweils Mittel aufweisen, eine Funktion zur Steuerung eines Kraftfahrzeugs gemäß einem (3, 4, 5, 6) jeweils zugeordneten Ablaufplan (7, 8, 9) bereitzustellen, sowie Mittel aufweisen, über ein Kommunikationsnetz (2) Nachrichten auszutauschen, **dadurch gekennzeichnet, dass** zum Synchronisieren der vernetzten Steuereinrichtungen (3, 4, 5, 6) mindestens eine Slave-Steuereinrichtung (3, 4, 5) Mittel aufweist, zu einem vorgegebenen Ablaufpunkt (11, 12, 13) in dem der Slave-Steuereinrichtung (3, 4, 5) zugeordneten Ablaufplan (7, 8, 9) eine Erledigt-Nachricht (14, 15, 16) an eine Master-Steuereinrichtung (6) zu senden, die Master-Steuereinrichtung (6) Mittel aufweist, die Erledigt-Nachricht (14, 15, 16) zu empfangen und eine Freigabe-Nachricht (17) an die
Slave-Steuereinrichtung (3, 4, 5) zu senden, sowie die Slave-Steuereinrichtung (3, 4, 5) Mittel aufweist, die Freigabe-Nachricht (17) zu empfangen, sowie die Slave-Steuereinrichtung (3, 4, 5) Mittel aufweist, nach dem Senden der Erledigt-Nachricht (14, 15, 16) eine weitere Bearbeitung des zugeordneten Ablaufplanes (7, 8, 9) zu stoppen, bis die Slave-Steuereinrichtung (3, 4, 5) von der Master-Steuereinrichtung (6) die Freigabe-Nachricht (17) empfängt.

10. Kommunikationsnetzwerkvorrichtung (1) nach Anspruch 9,
wobei die Steuereinrichtungen (3, 4, 5, 6) als programmgesteuerte Mikrocontroller ausgeführt sind, und ein jeweiliger Ablaufplan (7, 8, 9) als Programmcode mit Barrier-Befehlen implementiert ist, welche den Aufruf einer Barrier-Routine zum Senden von Erledigt-Nachrichten (14, 15, 16) veranlassen.

11. Kommunikationsnetzwerkvorrichtung (1) nach Anspruch 7 oder 8,
wobei der Datenbus (2) als CAN-, LIN- oder MOST-Bus, insbesondere in einem Kraftfahrzeug, ausgeführt ist.

## Claims

1. Method for synchronizing networked control devices (3, 4, 5, 6), wherein a respective control device (3, 4, 5, 6) provides a function for controlling a motor vehicle on the basis of a schedule (7, 8, 9) associated with the control device (3, 4, 5, 6) and messages can be interchanged between the control devices (3, 4, 5, 6) via a communication network (2), **characterized in that** at least one slave control device (3, 4, 5) sends a DONE message (14, 15, 16) to a master control device (6) at a prescribed execution point (11, 12, 13) in the schedule (7, 8, 9) associated with the slave control device (3, 4, 5), and further handling of the associated schedule (7, 8, 9) is stopped until the slave control device (3, 4, 5) receives a clearance message (17) from the master control device (6).

2. Method according to Claim 1,
wherein the following method steps are performed:
- associated schedules (7, 8, 9) are executed (100, 200, 300) in a plurality of slave control devices (3, 4, 5), a respective schedule (7, 8, 9) comprising commands (10) to be handled in succession;
- a DONE message (14, 15, 16) is sent (102, 202, 302) from a slave control device (3, 4, 5) to the master control device (6) if an execution point (11, 12, 13) - denoted by a barrier command - in the associated schedule (7, 8, 9) is reached, and the execution of the associated schedule (7, 8, 9) is simultaneously halted in the slave control device (3, 4, 5);
- DONE messages (14, 15, 16) are received (400) in the master control device (6), and the received DONE messages (14, 15, 16) are counted (401); and
- a clearance message (17) is sent (402) from the master control device (6) to the slave control devices (3, 4, 5) if a prescribed number of DONE messages (14, 15, 16) has been received.

3. Method according to Claim 1 or 2,
wherein a respective slave control device (3, 4, 5) executes the associated schedule (7, 8, 9) further as soon as the slave control device (3, 4, 5) has received a clearance message (17).

4. Method according to at least one of Claims 1-3, wherein the execution points (11, 12, 13) are allocated in execution classes, and the master control device (6) sends a clearance message (17) to the slave control devices (3, 4, 5) only when a respective DONE message (14, 15, 16) has been received for all the execution points (11, 12, 13) in an execution class.

5. Method according to Claim 4,
wherein the execution points (11, 12, 13) in an execution class are allocated an explicit identification number, and a respective DONE message (17) has the identification number of the execution point (11, 12, 13).

6. Method according to Claim 4 or 5,
wherein at least one schedule (7, 8, 9) contains a plurality of execution points which are associated with one or more execution classes.

7. Method according to at least one of Claims 4-6, wherein the number of received DONE messages (14, 15, 16) in an execution class is counted, and a prescribed number of received DONE messages (14, 15, 16) in an execution class prompts a clearance message (17) to be sent for the execution class.

8. Computer program product which prompts the performance of all the steps of a method according to one of Claims 1-7 on one or more program-controlled computation devices.

9. Communication network apparatus (1) having at least one master control device (6) and a plurality of slave control devices (3, 4, 5) which are networked to one another via a data bus (2), wherein the master and slave control devices (3, 4, 5, 6) each have means for providing a function for controlling a motor vehicle on the basis of a schedule (7, 8, 9) respectively associated with the control devices (3, 4, 5, 6) and have means for interchanging messages via a communication network (2), **characterized in that** for the purpose of synchronizing the networked control devices (3, 4, 5, 6) at least one slave control device (3, 4, 5) has means for sending a DONE message (14, 15, 16) to a master control device (6) at a prescribed execution point (11, 12, 13) in the schedule (7, 8, 9) associated with the slave control device (3, 4, 5), the master control device (6) has means for receiving the DONE message (14, 15, 16) and for sending a clearance message (17) to the slave control device (3, 4, 5), and the slave control device (3, 4, 5) has means for receiving the clearance message (17), and the slave control device (3, 4, 5) has means for stopping further handling of the associated schedule (7, 8, 9), when the DONE message (14, 15, 16) has been sent, until the slave control device (3, 4, 5) receives the clearance message (17) from the master control device (6).

10. Communication network apparatus (1) according to Claim 9, wherein the control devices (3, 4, 5, 6) are in the form of program-controlled microcontrollers, and a respective schedule (7, 8, 9) is implemented as program code with barrier commands which prompt the calling of a barrier routine for sending DONE messages (14, 15, 16).

11. Communication network apparatus (1) according to Claim 7 or 8, wherein the data bus (2) is in the form of CAN, LIN or MOST bus, particularly in a motor vehicle.

## Revendications

1. Procédé pour synchroniser des dispositifs de commande (3, 4, 5, 6) connectés en réseau, un dispositif de commande (3, 4, 5, 6) correspondant fournissant une fonction de commande d'un véhicule automobile conformément à un plan de déroulement (7, 8, 9) associé à l'un des dispositifs de commande (3, 4, 5, 6) et des messages pouvant être échangés entre les dispositifs de commande (3, 4, 5, 6) par le biais d'un réseau de communication (2), **caractérisé en ce qu'**un message d'accomplissement (14, 15, 16) est envoyé à un dispositif de commande maître (6) par au moins un dispositif de commande esclave (3, 4, 5) à un point de déroulement (11, 12, 13) prédéfini dans le plan de déroulement (7, 8, 9) associé au dispositif de commande esclave (3, 4, 5) et une poursuite du traitement du plan de déroulement (7, 8, 9) associé est stoppée jusqu'à ce que le dispositif de commande esclave (3, 4, 5) reçoive un message de libération (17) de la part du dispositif de commande maître (6).

2. Procédé selon la revendication 1,
selon lequel les étapes suivantes sont exécutées :
- exécution (100, 200, 300) des plans de déroulement (7, 8, 9) associés dans plusieurs dispositifs de commande esclaves (3, 4, 5), un plan de déroulement (7, 8, 9) correspondant comprenant des instructions (10) à traiter les unes après les autres ;
- envoi (102, 202, 302) d'un message d'accomplissement (14, 15, 16) par un dispositif de commande esclave (3, 4, 5) au dispositif de commande maître (6) dans le cas où un point de déroulement (11, 12, 13) **caractérisé par** une instruction barrière du plan de déroulement (7, 8, 9) associé est atteint et, simultanément, arrêt de l'exécution du plan de déroulement (7, 8, 9) associé dans le dispositif de commande esclave (3, 4, 5) ;
- réception (400) de messages d'accomplissement (14, 15, 16) dans le dispositif de commande maître (6) et comptage (401) des messages d'accomplissement (14, 15, 16) reçus ; et
- envoi (402) d'un message de libération (17) du dispositif de commande maître (6) aux dispositifs de commande esclaves (3, 4, 5) dans le cas où un nombre prédéfini de messages d'accomplissement (14, 15, 16) a été reçu.

3. Procédé selon la revendication 1 ou 2,
selon lequel un dispositif de commande esclave (3, 4, 5) correspondant poursuit l'exécution du plan de déroulement (7, 8, 9) associé dès qu'un message de libération (17) a été reçu par le dispositif de commande esclave (3, 4, 5).

4. Procédé selon au moins l'une des revendications 1 à 3,
selon lequel les points de déroulement (11, 12, 13) sont associés à des classes de déroulement et un message de libération (17) n'est envoyé par le dispositif de commande maître (6) aux dispositifs de commande esclaves (3, 4, 5) que lorsqu'un message d'accomplissement (14, 15, 16) respectif a été reçu pour tous les points de déroulement (11, 12, 13) d'une classe de déroulement.

5. Procédé selon la revendication 4,
selon lequel un numéro d'identification unique est attribué aux points de déroulement (11, 12, 13) d'une classe de déroulement et un message de libération (17) correspondant présente le numéro d'identification du point de déroulement (11, 12, 13).

6. Procédé selon la revendication 4 ou 5,
selon lequel dans au moins un plan de déroulement (7, 8, 9) sont prévus plusieurs points de déroulement qui sont associés à une ou plusieurs classes de déroulement.

7. Procédé selon au moins l'une des revendications 4 à 6,
selon lequel le nombre de messages d'accomplissement (14, 15, 16) reçus d'une classe de déroulement est compté et un message de libération (17) pour la classe de déroulement est envoyé après un nombre prédéfini de messages d'accomplissement (14, 15, 16) reçus d'une classe de déroulement.

8. Programme informatique qui provoque l'exécution de toutes les étapes d'un procédé selon l'une des revendications 1 à 7 sur une ou plusieurs unités de calcul programmables.

9. Équipement de réseau de communication (1) comprenant au moins un dispositif de commande maître (6) et plusieurs dispositifs de commande esclaves (3, 4, 5) qui sont interconnectés en réseau par le biais d'un bus de données (2), avec lequel les dispositifs de commande maîtres et esclaves (3, 4, 5, 6) présentent respectivement des moyens pour fournir une fonction de commande d'un véhicule automobile conformément à un plan de déroulement (7, 8, 9) à chaque fois associé aux dispositifs de commande (3, 4, 5, 6), et présentent des moyens pour échanger des informations par le biais d'un réseau de communication (2), **caractérisé en ce que** pour synchroniser les dispositifs de commande (3, 4, 5, 6) connectés en réseau, au moins un dispositif de commande esclave (3, 4, 5) présente des moyens pour envoyer un message d'accomplissement (14, 15, 16) à un dispositif de commande maître (6) à un point de déroulement (11, 12, 13) prédéfini dans le plan de déroulement (7, 8, 9) associé au dispositif de commande esclave (3, 4, 5), le dispositif de commande maître (6) présente des moyens pour recevoir le message d'accomplissement (14, 15, 16) et envoyer un message de libération (17) au dispositif de commande esclave (3, 4, 5), et le dispositif de commande esclave (3, 4, 5) présente des moyens pour recevoir le message de libération (17), et le dispositif de commande esclave (3, 4, 5) présente des moyens pour, après l'envoi du message d'accomplissement (14, 15, 16), stopper une poursuite du traitement du plan de déroulement (7, 8, 9) associé jusqu'à ce que le dispositif de commande esclave (3, 4, 5) reçoive le message de libération (17) de la part du dispositif de commande maître (6).

10. Équipement de réseau de communication (1) selon la revendication 9, dans lequel les dispositifs de commande (3, 4, 5, 6) sont réalisés sous la forme de microcontrôleurs programmables et un plan de déroulement (7, 8, 9) correspondant est mis en oeuvre sous la forme d'un code de programme avec des instructions barrières qui provoquent l'invocation d'une routine de barrière pour l'envoi des messages d'accomplissement (14, 15, 16).

11. Équipement de réseau de communication (1) selon la revendication 7 ou 8, dans lequel le bus de données (2) est réalisé sous la forme d'un bus CAN, LIN ou MOST, notamment dans un véhicule automobile.
